# EUROPEAN PATENT APPLICATION

(11) **EP 3 082 088 A1**
(43) Date of publication of application: **19.10.2016**
(21) Application number: 14869120.7
(22) Date of filing: 18.07.2014
(51) Int. Cl.: G06Q 30/00, G06K 19/06

(54) **INTER-SYSTEM DATA INTERACTION PLATFORM BASED ON DATA LABEL AND APPLICATION METHOD**

(30) Priority: 13.12.2013 CN 201310683777
(71) Applicant: Qu, Lidong, Beijing 100088 (CN)
(72) Inventor: Qu, Lidong, Beijing 100088 (CN)
(74) Representative: Szabo, Zsolt
(86) International application number: PCT/CN2014/082555
(87) International publication number: WO 2015/085773

(57) **Abstract**

The present invention relates to a data-tag-based inter-system data exchange platform and an application method thereof, and belongs to the technical field of computer information. The inter-system data exchange platform comprises a service resource management system, a data tag management system, an application terminal and a service resource system, wherein the data tag management system can obtain corresponding service resource information from the service resource management system according to different applications, and generate a data tag; the application terminal parses the data tag to obtain the corresponding service resource information and interacts with the service resource system, obtains the service results, achieves a plurality of service applications, so as to integrate conveniently and quickly various kinds of service application systems, facilitate data exchange among various systems, and at the same time improve user experience, so that the data tag can be applied in a larger commercial scale, moreover in the data-tag-based inter-system data exchange platform and an application method thereof of the present invention, the platform structure is simple, the realization mode of the method is simple and convenient, and the realization cost is low.

## Description

### Field of Technology

The present invention relates to the technical field of computer information, especially to the technical field of network-based data tag application, in particular to a data-tag-based inter-system data exchange platform and an application method thereof.

### Description of Related Arts

After bar code as one data tag was developed, it was applied firstly and widely in fields such as logistics and operations management, identification card management, and so on, due to its characteristics such as large information capacity, high security, high rate of data retrieval, and error correction ability. With the popularity of intelligent terminals with data communication function, the bar code gets new applications in the Object-to-Object (OTO) field, such as information acquisition, online shopping, commodity anti-counterfeiting, identity authentication, coupon distribution, and so on, by use of the merits of the bar code being a cross-media channel, the intelligent terminals connecting to the internet in real time, and the bar code being captured by cameras. However, the applications of the bar code in the OTO field focus mainly on providing access convenience in e-commerce; it still lacks in-depth applications.

On the other hand, when a large-scale commercial application is implemented, for example, online shopping, multiple network devices, such as a product information server, a storage information server, a logistics information server and a settlement server are needed to interact with each other, how to integrate various kinds of service applications conveniently and quickly into one application becomes an urgent problem that needs to be settled, at the same time, this also has a great restriction to the large-scale commercial application of the data tag.

### Summary of the Invention

In order to overcome the above mentioned shortcomings of the prior art, one object of the present invention is to provide a data-tag-based inter-system data exchange platform and an application method thereof, which can take advantage of the data tag, achieve effectively a system which integrates various kinds of service applications conveniently and quickly, facilitate data exchange among various systems, and at the same time improve user experience, so that the data tag can be applied in a larger commercial scale, moreover the structure is simple, the realization mode of the method is simple and convenient, and the realization cost is low.

In order to realize the above object, in a first aspect of the present invention, a data-tag-based inter-system data exchange platform is provided, and has the following structure:

The data-tag-based inter-system data exchange platform comprises a service resource management system, a data tag management system, an application terminal and a service resource system.

Wherein, the service resource management system is used to store pieces of service resource information, the service resource information at least includes corresponding application information and corresponding address information; the data tag management system is used to obtain at least one piece of corresponding service resource information from the service resource management system according to different applications, and generate a data tag according to the obtained service resource information; the application terminal is used to obtain the data tag from the data tag management system according to user operations, parse the data tag to obtain the corresponding service resource information and interact with a service resource system; and the service resource system includes a plurality of service providing servers, each service providing server corresponds to a piece of service resource information, and is used to interact with the application terminal, provide corresponding services and feed service results back to the application terminal.

In the data-tag-based inter-system data exchange platform, the data tag is a bar code, and the data tag management system at least includes a code issuing server, the code issuing server is used to obtain pieces of corresponding service resource information from the service resource management system according to the different applications, and generate the bar code according to the obtained service resource information.

In the data-tag-based inter-system data exchange platform, the data tag management system further includes a task server, the task server stores pieces of task information included in the applications and specific orders of the pieces of task information, and provides the specific orders of the pieces of task information to the code issuing server, and the bar code contains the specific orders of the pieces of task information.

In the data-tag-based inter-system data exchange platform, the application terminal includes a bar code decoding module, the bar code decoding module is used to parse the bar code to obtain the corresponding service resource information and the specific orders of the pieces of task information corresponding to the applications, and the application terminal interacts with corresponding service providing servers in the service resource system according to the specific orders of the pieces of task information.

The data-tag-based inter-system data exchange platform further comprises a service integration system, the service integration system is used to obtain the service results fed back by the service resource system to the application terminal, and store the service results and information about the service providing servers producing the service results.

In the data-tag-based inter-system data exchange platform, the service integration system further feeds the service results back to the data tag management system, to cause the data tag management system to generate a new bar code according to the pieces of service resource information of the different applications and the service results.

In a second aspect of the present invention, an application method of the data-tag-based inter-system data exchange platform is provided, and comprises the following steps:
(1) obtaining at least one piece of corresponding service resource information from the service resource management system according to different applications, and generating a data tag according to the obtained service resource information through the data tag management system;
(2) obtaining the data tag from the data tag management system according to user operations, parsing the data tag to obtain the corresponding service resource information and interacting with the service resource system through the application terminal;
(3) interacting with the application terminal, providing corresponding services and feeding service results back to the application terminal through the service resource system.

In the application method of the data-tag-based inter-system data exchange platform, the data tag is a bar code, and the data tag management system at least includes a code issuing server and a task server, the code issuing server is used to obtain pieces of corresponding service resource information from the service resource management system according to the different applications, and generate the bar code according to the obtained service resource information, the task server stores pieces of task information included in the applications and specific orders of the pieces of task information, and provides the specific orders of the pieces of task information to the code issuing server, and the bar code contains the specific orders of the pieces of task information, and the step (1) includes the following step in details:
obtaining the pieces of corresponding service resource information from the service resource management system according to the different applications, and obtaining the specific orders of the pieces of task information corresponding to the applications from the task server, and generating the bar code according to the obtained service resource information through the code issuing server, and the bar code further containing specific order information of the pieces of service resource information.

In the application method of the data-tag-based inter-system data exchange platform, the application terminal includes a bar code decoding module, and the step (2) includes the following steps in details:
(21) parsing the bar code to obtain the corresponding service resource information and the specific orders of the pieces of task information corresponding to the applications through the bar code decoding module;
(22) interacting with corresponding service providing servers in the service resource system according to the specific orders through the application terminal.

In the application method of the data-tag-based inter-system data exchange platform, the exchange platform further comprises a service integration system, and the method further comprises the following step:
(4) obtaining the service results fed back by the service resource system to the application terminal, and storing the service results and information about the service providing servers producing the service results through the service integration system.

In the application method of the data-tag-based inter-system data exchange platform, the method further comprises the following step:
(5) further feeding the service results back to the data tag management system through the service integration system, and generating a new bar code according to the pieces of service resource information of the different applications and the service results through the data tag management system.

With the data-tag-based inter-system data exchange platform of the present invention, for it comprises a service resource management system, a data tag management system, an application terminal and a service resource system, wherein the data tag management system can obtain corresponding service resource information from the service resource management system according to different applications, and generate a data tag; the application terminal parses the data tag to obtain the corresponding service resource information and interacts with the service resource system, obtains the service results, achieves a plurality of service applications, so as to integrate conveniently and quickly various kinds of service application systems, facilitate data exchange among various systems, and at the same time improve user experience, so that the data tag can be applied in a larger commercial scale, moreover in the data-tag-based inter-system data exchange platform and an application method thereof of the present invention, the platform structure is simple, the realization mode of the method is simple and convenient, and the realization cost is low.

### Brief Description of the Drawings

Fig. 1 shows a flow chart of the application method of the data-tag-based inter-system data exchange platform of the present invention.
Fig. 2 shows a schematic view of the structure of the data-tag-based inter-system data exchange platform of the present invention achieving the task management in one same service in practical applications.
Fig. 3 shows a schematic view of the structure of the data-tag-based inter-system data exchange platform of the present invention achieving the task management among different services in practical applications.

### Detailed Description of the Preferred Embodiment

In order to understand the technical content of the present invention clearly, the present invention is further exemplified by reference to the following examples.

In one embodiment, the data-tag-based inter-system data exchange platform comprises a service resource management system, a data tag management system, an application terminal and a service resource system.

Wherein, the service resource management system is used to store pieces of service resource information, the service resource information at least includes corresponding application information and corresponding address information; the data tag management system is used to obtain at least one piece of corresponding service resource information from the service resource management system according to different applications, and generate a data tag according to the obtained service resource information; the application terminal is used to obtain the data tag from the data tag management system according to user operations, parse the data tag to obtain the corresponding service resource information and interact with a service resource system,; and the service resource system includes a plurality of service providing servers, each service providing server corresponds to a piece of service resource information, and is used to interact with the application terminal, provide corresponding services and feed service results back to the application terminal.

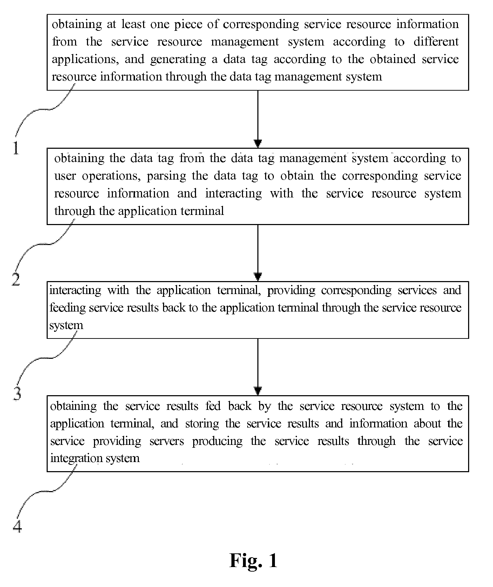

An application method of the data-tag-based inter-system data exchange platform described in this embodiment, as shown in Fig. 1, comprises the following steps:
(1) obtaining at least one piece of corresponding service resource information from the service resource management system according to different applications, and generating a data tag according to the obtained service resource information through the data tag management system;
(2) obtaining the data tag from the data tag management system according to user operations, parsing the data tag to obtain the corresponding service resource information and interacting with the service resource system through the application terminal;
(3) interacting with the application terminal, providing corresponding services and feeding service results back to the application terminal through the service resource system.

In a relatively preferred embodiment, the data tag is a bar code, and the data tag management system at least includes a code issuing server, the code issuing server is used to obtain pieces of corresponding service resource information from the service resource management system according to the different applications, and generate the bar code according to the obtained service resource information. the data tag management system further includes a task server, the task server stores pieces of task information included in the applications and specific orders of the pieces of task information, and provides the specific orders of the pieces of task information to the code issuing server, and the bar code contains the specific orders of the pieces of task information.

In the application method applied for the data-tag-based inter-system data exchange platform described in the relatively preferred embodiment, the step (1) includes the following step in details: obtaining the pieces of corresponding service resource information from the service resource management system according to the different applications, and obtaining the specific orders of the pieces of task information corresponding to the applications from the task server, and generating the bar code according to the obtained service resource information through the code issuing server, and the bar code further containing specific order information of the pieces of service resource information.

In a further preferred embodiment, the application terminal includes a bar code decoding module, the bar code decoding module is used to parse the bar code to obtain the corresponding service resource information and the specific orders of the pieces of task information corresponding to the applications, and the application terminal interacts with corresponding service providing servers in the service resource system according to the specific orders of the pieces of task information.

In the application method applied for the data-tag-based inter-system data exchange platform described in the further preferred embodiment, the step (2) includes the following steps in details:
(21) parsing the bar code to obtain the corresponding service resource information and the specific orders of the pieces of task information corresponding to the applications through the bar code decoding module;
(22) interacting with corresponding service providing servers in the service resource system according to the specific orders through the application terminal.

In a more preferred embodiment, the data-tag-based inter-system data exchange platform further comprises a service integration system, the service integration system is used to obtain the service results fed back by the service resource system to the application terminal, and store the service results and information about the service providing servers producing the service results. The service integration system further feeds the service results back to the data tag management system, to cause the data tag management system to generate a new bar code according to the pieces of service resource information of the different applications and the service results.

In the application method applied for the data-tag-based inter-system data exchange platform described in the more preferred embodiment, the method further comprises the following step:
(4) obtaining the service results fed back by the service resource system to the application terminal, and storing the service results and information about the service providing servers producing the service results through the service integration system.
(5) further feeding the service results back to the data tag management system through the service integration system, and generating a new bar code according to the pieces of service resource information of the different applications and the service results through the data tag management system.

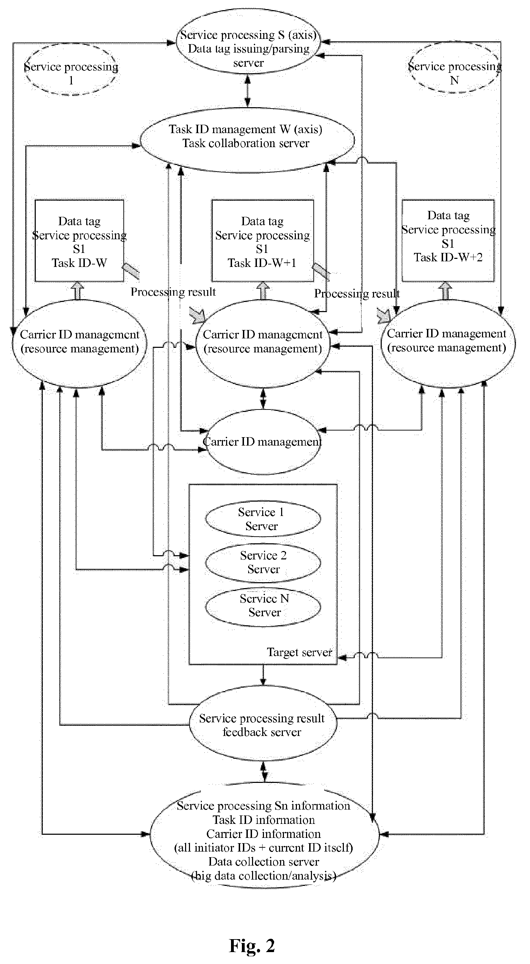

The practical applications of the present invention are exemplified by the following two embodiments:
1. OTO shopping and parental supervision and payment (task management in one service), the platform structure is as shown in Fig. 2.

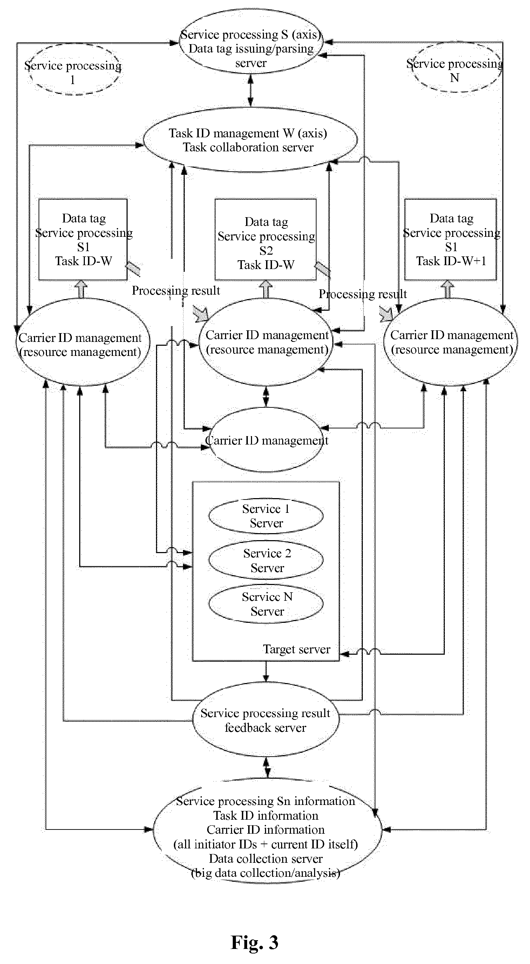

When one teenager under the age of 18 purchases an item at an OTO store, after the item is ordered and purchased, the system generates a data tag that the order needs to be paid. Due to the purchaser of the item is under the age of 18, the order needs his/her parent(s) (guardian(s)) to confirm and pay, the system (the service resource management system and the data tag management system) pushes the order content in the form of the data tag to the parent(s) (the guardian(s), the application terminal), it is up to the guardian(s) (through the application terminal) to judge/decide whether the ordered item should be purchased or not, if yes, the purchase order is paid (through a payment platform, a service resource system) (the payment result is fed back to the service resource management system and the data tag management system).
2. Enterprise internal ERP (task management among different services), the platform structure is as shown in Fig. 3.

In an enterprise conference, when the sales staff need to obtain the inventory situation of the current enterprise warehouse goods to make a sales plan, they send a data tag that corresponding warehouse goods information needs to be opened by the warehouse staff (the application terminal) to the warehouse staff of the enterprise (through the service resource management system and the data tag management system). When the warehouse staff obtain the data tag information sent by the sales staff, they do an open authorization operation to the warehouse information (through the service resource system) according to the information that needs to be authorized. After the warehouse goods information is authorized to open by the warehouse staff (the warehouse goods information is fed back to the service resource management system and the data tag management system), the information needed by the sales staff is provided to the conference for use.

With the data-tag-based inter-system data exchange platform of the present invention, for it comprises a service resource management system, a data tag management system, an application terminal and a service resource system, wherein the data tag management system can obtain corresponding service resource information from the service resource management system according to different applications, and generate a data tag; the application terminal parses the data tag to obtain the corresponding service resource information and interacts with the service resource system, obtains the service results, achieves a plurality of service applications, so as to integrate conveniently and quickly various kinds of service application systems, facilitate data exchange among various systems, and at the same time improve user experience, so that the data tag can be applied in a larger commercial scale, moreover in the data-tag-based inter-system data exchange platform and an application method thereof of the present invention, the platform structure is simple, the realization mode of the method is simple and convenient, and the realization cost is low.

In the present specification, the present invention has been described with specific examples. However, it should be noted that various modifications and variations may be made without departing from the spirit and scope of the invention. Accordingly, the specification and drawings are to be regarded for illustrative rather than restrictive purposes.

## Claims

1. A data-tag-based inter-system data exchange platform, comprising:
a service resource management system, used to store pieces of service resource information, the service resource information at least including corresponding application information and corresponding address information;
a data tag management system, used to obtain at least one piece of corresponding service resource information from the service resource management system according to different applications, and generate a data tag according to the obtained service resource information;
an application terminal, used to obtain the data tag from the data tag management system according to user operations, parse the data tag to obtain the corresponding service resource information and interact with a service resource system; and
the service resource system, including a plurality of service providing servers, each service providing server corresponding to a piece of service resource information, and being used to interact with the application terminal, provide corresponding services and feed service results back to the application terminal.

2. The data-tag-based inter-system data exchange platform of claim 1, wherein, the data tag is a bar code, and the data tag management system at least includes a code issuing server, the code issuing server is used to obtain pieces of corresponding service resource information from the service resource management system according to the different applications, and generate the bar code according to the obtained service resource information.

3. The data-tag-based inter-system data exchange platform of claim 2, wherein, the data tag management system further includes a task server, the task server stores pieces of task information included in the applications and specific orders of the pieces of task information, and provides the specific orders of the pieces of task information to the code issuing server, and the bar code contains the specific orders of the pieces of task information.

4. The data-tag-based inter-system data exchange platform of claim 3, wherein, the application terminal includes a bar code decoding module, the bar code decoding module is used to parse the bar code to obtain the corresponding service resource information and the specific orders of the pieces of task information corresponding to the applications, and the application terminal interacts with corresponding service providing servers in the service resource system according to the specific orders of the pieces of task information.

5. The data-tag-based inter-system data exchange platform of any one of claims 1-4, wherein, the data-tag-based inter-system data exchange platform further comprises a service integration system, the service integration system is used to obtain the service results fed back by the service resource system to the application terminal, and store the service results and information about the service providing servers producing the service results.

6. The data-tag-based inter-system data exchange platform of claim 5, wherein, the service integration system further feeds the service results back to the data tag management system, to cause the data tag management system to generate a new bar code according to the pieces of service resource information of the different applications and the service results.

7. An application method of the data-tag-based inter-system data exchange platform of claim 1, comprising the following steps:
(1) obtaining at least one piece of corresponding service resource information from the service resource management system according to different applications, and generating a data tag according to the obtained service resource information through the data tag management system;
(2) obtaining the data tag from the data tag management system according to user operations, parsing the data tag to obtain the corresponding service resource information and interacting with the service resource system through the application terminal;
(3) interacting with the application terminal, providing corresponding services and feeding service results back to the application terminal through the service resource system.

8. The application method of the data-tag-based inter-system data exchange platform of claim 7, wherein, the data tag is a bar code, and the data tag management system at least includes a code issuing server and a task server, the code issuing server is used to obtain pieces of corresponding service resource information from the service resource management system according to the different applications, and generate the bar code according to the obtained service resource information, the task server stores pieces of task information included in the applications and specific orders of the pieces of task information, and provides the specific orders of the pieces of task information to the code issuing server, and the bar code contains the specific orders of the pieces of task information, and the step (1) includes the following step in details:
obtaining the pieces of corresponding service resource information from the service resource management system according to the different applications, and obtaining the specific orders of the pieces of task information corresponding to the applications from the task server, and generating the bar code according to the obtained service resource information through the code issuing server, and the bar code further containing specific order information of the pieces of service resource information.

9. The application method of the data-tag-based inter-system data exchange platform of claim 8, wherein, the application terminal includes a bar code decoding module, and the step (2) includes the following steps in details:
(21) parsing the bar code to obtain the corresponding service resource information and the specific orders of the pieces of task information corresponding to the applications through the bar code decoding module;
(22) interacting with corresponding service providing servers in the service resource system according to the specific orders through the application terminal.

10. The application method of the data-tag-based inter-system data exchange platform of any one of claims 7-9, wherein, the data-tag-based inter-system data exchange platform further comprises a service integration system, and the method further comprises the following step:
(4) obtaining the service results fed back by the service resource system to the application terminal, and storing the service results and information about the service providing servers producing the service results through the service integration system.

11. The application method of the data-tag-based inter-system data exchange platform of claim 10, wherein, the method further comprises the following step:
(5) further feeding the service results back to the data tag management system through the service integration system, and generating a new bar code according to the pieces of service resource information of the different applications and the service results through the data tag management system.
